# EUROPÄISCHE PATENTSCHRIFT

(11) **EP 1 196 302 B1**
(45) Veröffentlichungstag und Bekanntmachung des Hinweises auf die Patenterteilung: **05.03.2008**
(21) Anmeldenummer: 00953049.4
(22) Anmeldetag: 15.07.2000
(51) Int. Cl.: B60K 6/20, B60L 11/12, B60L 7/10, B60W 20/00

(54) **ELEKTRODYNAMISCHES ANTRIEBSSYSTEM**
ELECTRODYNAMIC DRIVE TRAIN
SYSTEME D'ENTRAINEMENT ELECTRODYNAMIQUE

(30) Priorität: 23.07.1999 DE 19934696
(43) Veröffentlichungstag der Anmeldung: 17.04.2002
(73) Patentinhaber: ZF FRIEDRICHSHAFEN Aktiengesellschaft, 88038 Friedrichshafen (DE)
(72) Erfinder: EHRLINGER, Friedrich, J., D-88048 Friedrichshafen (DE)
(86) Internationale Anmeldenummer: PCT/EP2000/006764
(87) Internationale Veröffentlichungsnummer: WO 2001/007278

(56) Entgegenhaltungen:
- EP-A- 0 552 140
- EP-A- 0 648 635
- EP-A- 0 769 403
- EP-A- 0 769 404
- EP-A- 0 845 618
- DE-A- 2 510 623
- DE-A- 3 246 230
- DE-A- 19 513 696
- DE-A- 19 749 074
- US-A- 3 077 115

## Beschreibung

Die Erfindung betrifft ein elektrodynamisches Antriebssystem für ein Fahrzeug nach dem Oberbegriff von Anspruch 1. Ein derartiges system ist aus der US-A-3077115 bekannt.

Antriebssysteme für Fahrzeuge weisen üblicherweise einen Verbrennungsmotor als Antriebsmaschine, ein nachgeordnetes Schaltgetriebe und eine zwischen Verbrennungsmotor und Getriebe angeordnete Reibungskupplung oder einen zwischen Verbrennungsmotor und Getriebe angeordneten hydrodynamischen Wandler auf. Die Reibungskupplung bzw. der Wandler sind mit Verlusten behaftet und stellen Energieleckagen im Antriebsstrang dar.

Der Erfindung liegt die Aufgabe zugrunde, die zwischen Antriebsmaschine und Schaltgetriebe auftretenden Verluste zu minimieren.

Die Aufgabe wird gelöst mit einem Antriebssystem mit den Merkmalen von Anspruch 1. Ausgestaltungen sind Gegenstand von Unteransprüchen.

Erfindungsgemäß wird vorgeschlagen, bei einem elektrodynamischen Antriebssystem für ein Fahrzeug zwischen einer Antriebsmaschine und einem Schaltgetriebe ein Planetengetriebe vorzusehen, das die drei Elemente Sonnenrad, Hohlrad und Planetenträger umfaßt. Von diesen Elementen ist ein erstes Element mit dem Schaltgetriebe verbunden, ein zweites Element ist mit der Antriebsmaschine verbunden und ein drittes Element ist mit wenigstens einem Elektromotor verbunden. Das System weist eine Steuerung auf, die den wenigstens einen Elektromotor im 4-Quadranten-Betrieb ansteuern kann, und eine Schaltkupplung zwischen zwei Elementen des Planetengetriebes zur Überbrückung des Planetengetriebes auf, die in einer Ausführung eine Klauenkupplung umfaßt. In einer weiteren Ausführung ist zwischen der Antriebsmaschine und dem elektrodynamischen Antriebssystem ein Überholfreilauf vorgesehen. Bei einer Ausführungsform wirken mehrere Elektromotoren kombiniert auf eines der Elemente des Planetengetriebes ein. Bei einer vorteilhaften Ausführungsform ist zur Bildung einer Drehmomentabstützung während des Startvorganges der Antriebsmaschine eine Blockiereinrichtung vorgesehen. Diese kann durch das gleichzeitige Einlegen zweier Gangstufen im Schaltgetriebe, durch eine Parksperre, durch eine Bremseinrichtung des Fahrzeugs und eine gleichzeitig eingelegte Gangstufe des Schaltgetriebes oder durch einen Sperrfreilauf auf einer Eingangswelle des Schaltgetriebes gebildet sein. In einer Ausgestaltungsform ist auf einer Welle des Planetengetriebes eine Dauerbremseinrichtung angeordnet.

Durch das erfindungsgemäße Antriebssystem wird eine umweltfreundlichere Funktion des Fahrzeugs und die Senkung der Lebensdauerkosten erreicht. Mit der vorliegenden Erfindung wird ein Antriebssystem aufgezeigt, das ein reibungsbehaftetes Anfahrelement vermeidet. Die Schlupfleistung aus dem Anfahrvorgang kann als Nutzleist für das elektrische Bordsystem verwendet werden. Gleichzeitig stellt die Nutzung des Elektromotors eine Funktion zur Drehmomenterhöhung beim Anfahren dar und kann als Boosterelement im Sinne eines zusätzlichen Antriebs während einer Beschleunigungsphase genutzt werden. Nach der Anfahrphase kann der Elektromotor als Generator zur Bordstromversorgung genutzt werden. Der Elektromotor kann zusätzlich auch als Quelle zur Erzeugung von Kraftstrom für elektrisch angetrieben Nebenantriebe verwendet werden. Die Nutzung des Elektromotors als Starter für den Verbrennungsmotor und als Fahrzeugantrieb ohne Schadstoffausstoß ist immanent. Gleichzeitig ist bei entsprechender Ansteuerung, auch in Verbindung mit einer Dauerbremseinrichtung wie beispielsweise einem hydrodynamischen Retarder, eine Dämpfung von Stößen im Antriebsstrang erreichbar.

Das im erfindungsgemäßen Antriebssystem vorgeschlagene Planetengetriebe ist einem beliebigen Schaltgetriebe vorgeschaltet. An den Gliedern des Planetengetriebes sind angeschlossen:
- die Eingangswelle vom Verbrennungsmotor, gegebenenfalls mit einem Überholfreilauf für einen Start-Stop-Betrieb oder für den ZEV-Betrieb, d. h. für den Antrieb des Fahrzeugs aus dem Elektromotor, ohne daß der Verbrennungsmotor dreht,
- wenigstens ein Elektromotor, der sowohl als Antriebsmotor als auch als Generator arbeiten kann,
- gegebenenfalls eine Schaltkupplung zum Überbrücken des Elektromotors, wenn er nicht mehr als Motor gebraucht wird
- sowie die Ausgangswelle zum Schaltgetriebe und
- gegebenenfalls ein Retarder.

Gegenüber herkömmlichen Antriebssystemen können entfallen:
- Trockenkupplung mit Ausrückung,
- Anlasser,
- Generator (Lichtmaschine),
- gegebenenfalls mechanische Nebenabtriebe,
- teilweise eine oder mehrere mechanische Gangstufen, weil das elektrodynamische Antriebssystem eine entsprechende Drehmomentüberhöhung bringt.

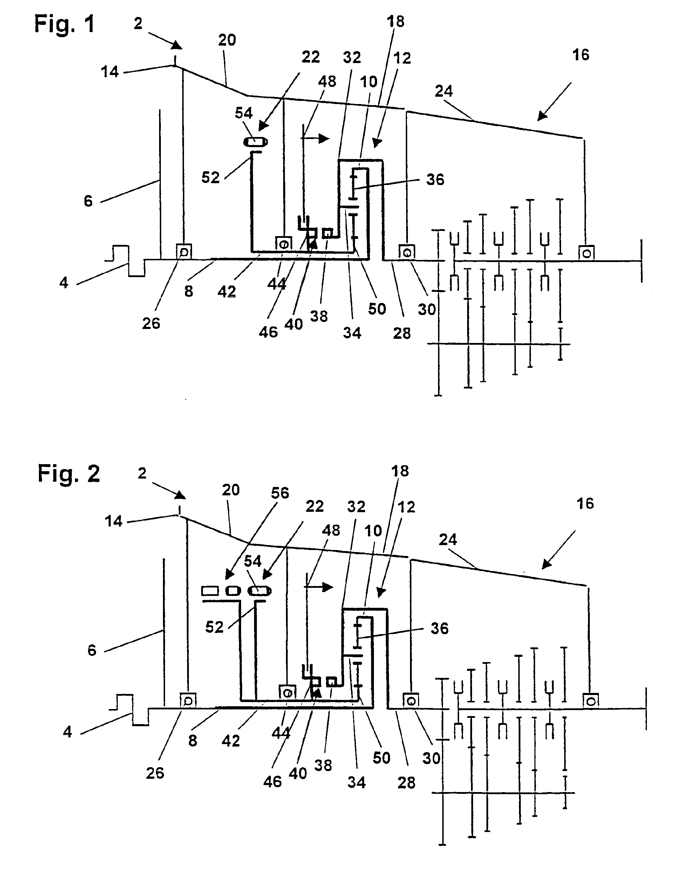

Die Erfindung wird anhand einer Zeichnung näher erläutert, wobei die Figuren 1 und 2 nicht alle Merkmale des Anspruchs 1 umfassen.

Es zeigen:
- Fig. 1: eine Prinzipskizze;
- Fig. 2: eine Ausführung nach Fig. 1 mit Dauerbremseinrichtung;
- Fig. 3: eine Ausführung nach Fig. 1 mit Freilauf;
- Fig. 4: eine Ausführung nach Fig. 3 mit Dauerbremseinrichtung und
- Fig. 5: eine Ausführung nach Fig. 4 mit zusätzlichem Freilauf.

Die Fig. 1 zeigt in einer Prinzipskizze ein Antriebssystem 2. Am Ausgang einer Antriebsmaschine 4 ist ein Schwungrad 6 angeordnet, das über eine Welle 8 mit dem Hohlrad 10 des Planetengetriebes 12 verbunden ist.

Das Planetengetriebe 12 ist in einem Teil 18 des Gehäuses 14 des Schaltgetriebes 16 angeordnet. In einem weiteren Teil 20 des Gehäuses 14 ist der Elektromotor 22 vorgesehen. Innerhalb eines Teils 24 des Gehäuses 14 sind die bekannten Elemente eines Schaltgetriebes 16 untergebracht, auf die hier nicht näher eingegangen wird. Die Teile 18, 20 und 24 können auch als separate Gehäuseteile zu einem Gesamtgehäuse 14 verbunden sein.
Die Welle 8 ist im Teil 20 des Gehäuses 14 in einer Lagerung 26 drehbar gelagert. Die Eingangswelle 28 des Schaltgetriebes 16 ist in einer Lagerung 30 drehbar gelagert und ist mit dem Planetenträger 32 des Planetengetriebes 12 drehfest verbunden. Auf Lagerbolzen 34 des Planetenträgers 32 sind Planetenräder 36 drehbar gelagert. Der Planetenträger 32 weist weiter eine Kupplungsverzahnung 38 einer Überbrückungskupplung 40 auf, mit der der Planetenträger 32 mit einer Welle 42 drehfest verbindbar ist. Dazu weist die in einer Lagerung 44 im Teil 18 des Gehäuses 14 gelagerte Welle 42 eine Kupplungsverzahnung 46 auf, die durch ein Schaltelement 48 mit der Kupplungsverzahnung 38 in drehfesten Eingriff bringbar ist. Dadurch wird eine Überbrückung des Planetengetriebes 12 erzielt.
Die Planetenräder 36 kämmen in ihren Verzahnungen sowohl mit dem Hohlrad 10 als auch mit einem Sonnenrad 50, das mit einer Welle 42 drehfest verbunden ist. Die Welle 42 weist im Teil 18 des Gehäuses 14 den Rotor 52 des Elektromotors 22 auf. Der Stator 54 des Elektromotors 22 ist im Gehäuse 14 befestigt.

Die Fig. 2 zeigt die Anordnung nach Fig. 1 mit einer zusätzlichen Dauerbremseinrichtung 56 in Form einer Wirbelstrombremse. Entsprechende Bauteile in Fig. 2 sind mit entsprechenden Bezugsziffern wie in Fig. 1 bezeichnet. Die rotierenden Teile der Wirbelstrombremse 56 sind an der Welle 42 angeordnet und die nicht rotierenden Elemente sind im Teil 20 im Gehäuse 14 befestigt. Die Dauerbremseinrichtung dient einer verschleißfreien Bremsung des Fahrzeugs insbesondere auf langen Gefällstrecken.

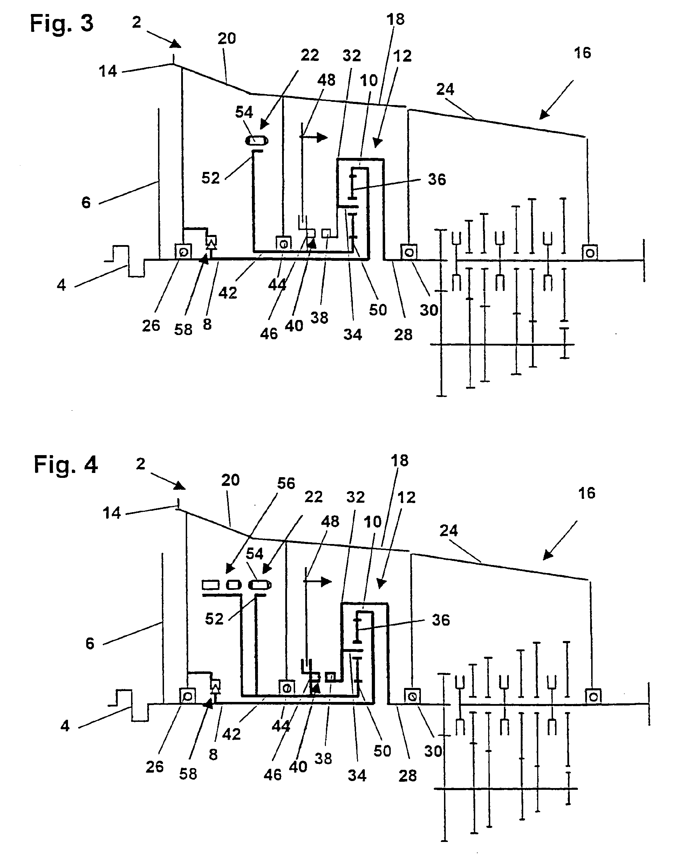

Die Fig. 3 zeigt die Anordnung nach Fig. 1 mit einem zusätzlichen Freilauf 58. Entsprechende Bauteile in Fig. 3 sind mit entsprechenden Bezugsziffern wie in Fig. 1 bezeichnet. Die rotierenden Teile des Freilaufs 58 sind an der Welle 8 angeordnet und die nicht rotierenden Elemente sind im Teil 20 im Gehäuse 14 befestigt. Der Freilauf 58 dient zum Antrieb des Fahrzeugs aus dem Elektromotor 22 heraus, ohne daß die Antriebsmaschine 4 dreht.

Die Fig. 4 zeigt die Anordnung nach Fig. 3 mit einer zusätzlichen Dauerbremseinrichtung 56 in Form einer Wirbelstrombremse. Entsprechende Bauteile in Fig. 4 sind mit entsprechenden Bezugsziffern wie in Fig. 3 bezeichnet.

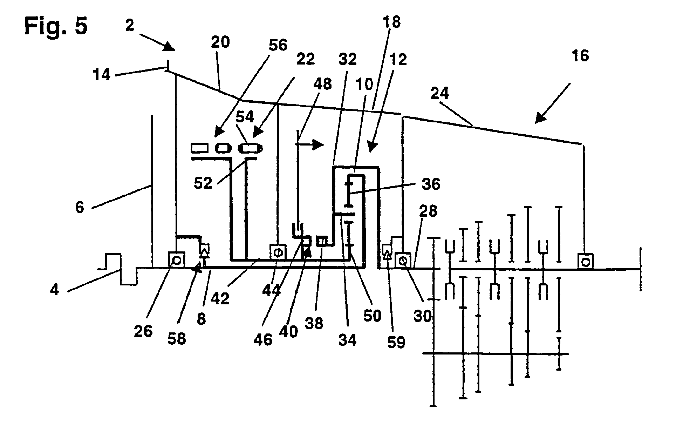

Die Fig. 5 zeigt eine Anordnung mit einem Überholfreilauf 59 auf der Eingangswelle 28 des Schaltgetriebes 16. Dieser Freilauf 59 stützt die Eingangswelle 28 gegen ein Rückwärtsdrehen ab, wenn im Fahrzeugstillstand die Antriebsmaschine 4 von dem Elektromotor 22 gestartet wird.

### Bezugszeichen

- 2: Antriebssystem
- 4: Antriebsmaschine
- 6: Schwungrad
- 8: Welle
- 10: Hohlrad
- 12: Planetengetriebe
- 14: Gehäuse
- 16: Schaltgetriebe
- 18: Gehäuseteil
- 20: Gehäuseteil
- 22: Elektromotor
- 24: Gehäuseteil
- 26: Lagerung
- 28: Eingangswelle
- 30: Lagerung
- 32: Planetenträger
- 34: Lagerbolzen
- 36: Planetenrad
- 38: Kupplungsverzahnung
- 40: Überbrückungskupplung
- 42: Welle
- 44: Lagerung
- 46: Kupplungsverzahnung
- 48: Schaltelement
- 50: Sonnenrad
- 52: Rotor
- 54: Stator
- 56: Dauerbremseinrichtung
- 58: Freilauf
- 59: Freilauf

## Patentansprüche

1. Elektrodynamisches Antriebssystem (2) für ein Fahrzeug zwischen einer Antriebsmaschine (4) und einem Schaltgetriebe (16), wobei das Antriebssystem (2) ein Planetengetriebe (12) aufweist, das die drei Elemente Sonnenrad (50), Hohlrad (10) und Planetenträger (32) umfaßt, von denen ein erstes Element (32) mit dem Schaltgetriebe (16) verbunden ist, ein zweites Element (10) mit der Antriebsmaschine (4) verbunden ist und ein drittes Element (50) mit wenigstens einem Elektromotor (22) verbunden ist, und wobei eine Schaltkupplung (40) zwischen zwei Elementen (32, 50) des Planetengetriebes (12) zur Überbrückung des Planetengetriebes (12) vorgesehen ist,
**dadurch gekennzeichnet, daß** eine Steuerung vorgesehen ist, durch die der wenigstens eine Elektromotor (22) im 4-Quadranten-Betrieb ansteuerbar ist, und **daß** zwischen der Antriebsmaschine (4) und dem elektrodynamischen Antriebssystem (2) ein Freilauf (58) vorgesehen ist.

2. Elektrodynamisches Antriebssystem (2) für ein Fahrzeug nach Anspruch 1, **dadurch gekennzeichnet, daß** die Schaltkupplung (40) eine Klauenkupplung umfaßt.

3. Elektrodynamisches Antriebssystem (2) für ein Fahrzeug nach einem der Ansprüche 1 bis 2, **dadurch gekennzeichnet, daß** auf einer Welle (42) des Planetengetriebes (12) eine Dauerbremseinrichtung (56) angeordnet ist.

4. Elektrodynamisches Antriebssystem (2) für ein Fahrzeug nach einem der Ansprüche 1 bis 3, **dadurch gekennzeichnet, daß** mehrere Elektromotoren (22) auf eines der Elemente (50) des Planetengetriebes (12) einwirken.

5. Elektrodynamisches Antriebssystem (2) für ein Fahrzeug nach einem der Ansprüche 1 bis 4, **dadurch gekennzeichnet, daß** eine Blockiereinrichtung vorgesehen ist zur Bildung einer Drehmomentabstützung während des Startvorganges der Antriebsmaschine (4).

6. Elektrodynamisches Antriebssystem (2) für ein Fahrzeug nach Anspruch 5, **dadurch gekennzeichnet, daß** die Blockiereinrichtung im Schaltgetriebe (16) durch das gleichzeitige Einlegen zweier Gangstufen gebildet ist.

7. Elektrodynamisches Antriebssystem (2) für ein Fahrzeug nach Anspruch 5, **dadurch gekennzeichnet, daß** die Blockiereinrichtung durch eine Parksperre gebildet ist.

8. Elektrodynamisches Antriebssystem (2) für ein Fahrzeug nach Anspruch 5, **dadurch gekennzeichnet, daß** die Blockiereinrichtung durch eine Bremseinrichtung des Fahrzeugs und eine gleichzeitig eingelegte Gangstufe des Schaltgetriebes (16) gebildet ist.

9. Elektrodynamisches Antriebssystem (2) für ein Fahrzeug nach Anspruch 5, **dadurch gekennzeichnet, daß** die Blockiereinrichtung durch einen Freilauf (59) auf einer Eingangswelle (28) des Schaltgetriebes (16) gebildet ist.

## Claims

1. The invention relates to an electrodynamic drive system (2) for a vehicle between a driving motor (4) and a mechanical transmission (16), with the drive system (2) featuring a planet gear (12) which comprises the three elements sun gear (50), internal gear (10) and planet carrier (32), of which a first element (32) is linked to the mechanical transmission (16), a second element (10) is linked to the driving motor (4), and a third element (50) is linked to at least one electric motor (22), and with a dutch (40) being provided between two elements (32, 50) of the planet gear (12) for bypassing the planet gear (12), **characterized in that** a control is provided by means of which at least one electric motor (22) can be controlled in the 4-quadrant mode, and that a freewheel device (58) is provided between the driving motor (4) and the electrodynamic drive system (2).

2. Electrodynamic drive system (2) for a vehicle according to claim 1, **characterized in that** the dutch (40) comprises a dog dutch.

3. Electrodynamic drive system (2) for a vehicle according to one of the claims 1 to 2, **characterized in that** a continuous-service braking equipment (56) is arranged on one shaft (42) of the planet gear (12).

4. Electrodynamic drive system (2) for a vehicle according to one of the claims 1 thru 3, **characterized in that** several electric motors (22) act on one of the elements (50) of the planet gear (12).

5. Electrodynamic drive system (2) for a vehicle according to one of the claims 1 thru 4, **characterized in that** a blocking mechanism is provided for the buildup of a torque support during the starting process of the driving motor (4).

6. Electrodynamic drive system (2) for a vehicle according to claim 5, **characterized in that** the blocking mechanism in the mechanical transmission (16) is realized by the simultaneous engagement of two gear steps.

7. Electrodynamic drive system (2) for a vehicle according to claim 5, **characterized in that** the blocking mechanism is realized by a parking interlock.

8. Electrodynamic drive system (2) for a vehicle according to claim 5, **characterized in that** the blocking mechanism is realized by a braking device of the vehicle and a simultaneously engaged gear step of the mechanical transmission (16).

9. Electrodynamic drive system (2) for a vehicle according to claim 5,
**characterized in that** the blocking mechanism is realized by a freewheel (59) on an input shaft (28) of the mechanical transmission (16).

## Revendications

1. Système d'entraînement électrodynamique (2) pour un véhicule, intercalé entre un moteur d'entraînement (4) et une boîte de vitesses (16), dans lequel le système d'entraînement (2) comporte un train épicycloïdal (12) qui comprend trois éléments roue planétaire (50), couronne à denture intérieure (10) et porte-satellites (32), parmi lesquels un premier élément (32) est relié à la boîte de vitesses (16), un deuxième élément (10) est relié au moteur d'entraînement (4) et un troisième élément (50) est relié à au moins un moteur électrique (22), et dans lequel un embrayage de commande (40) est prévu entre deux éléments (32, 50) du train épicycloïdal (12) pour court-circuiter le train épicycloïdal (12), **caractérisé en ce qu'**il est prévu une commande par laquelle le au moins un moteur électrique (22) peut être actionné dans le mode à 4 quadrants, et **en ce qu'**une roue libre (58) est prévue entre le moteur d'entraînement (4) et le système d'entraînement électrodynamique (2).

2. Système d'entraînement électrodynamique (2) pour un véhicule selon la revendication 1, **caractérisé en ce que** l'embrayage de commande (40) comprend un embrayage à crabots.

3. Système d'entraînement électrodynamique (2) pour un véhicule selon l'une des revendications 1 à 2, **caractérisé en ce qu'**un dispositif de freinage continu (56) est monté sur un arbre (42) du train épicycloïdal (12).

4. Système d'entraînement électrodynamique (2) pour un véhicule, selon l'une des revendications 1 à 3, **caractérisé en ce que** plusieurs moteurs électriques (22) agissent sur un des éléments (50) du train épicycloïdal (12).

5. Système d'entraînement électrodynamique (2) pour un véhicule selon l'une des revendications 1 à 4, **caractérisé en ce qu'**un dispositif de blocage est prévu pour constituer un élément de réaction de couple pendant le processus de démarrage du moteur d'entraînement (4).

6. Système d'entraînement électrodynamique (2) pour un véhicule selon la revendication 5, **caractérisé en ce que** le dispositif de blocage est formé dans la boîte de vitesses (16) par l'enclenchement simultané de deux vitesses.

7. Système d'entraînement électrodynamique (2) pour un véhicule selon la revendication 5, **caractérisé en ce que** le dispositif de blocage est formé par un frein de stationnement.

8. Système d'entraînement électrodynamique (2) pour un véhicule selon la revendication 5, **caractérisé en ce que** le dispositif de blocage est formé par un dispositif de freinage du véhicule et un étage de vitesse de la boîte de vitesses (16) enclenché en même temps.

9. Système d'entraînement électrodynamique (2) pour un véhicule, selon la revendication 5, **caractérisé en ce que** le dispositif de blocage est formé par une roue libre (59) montée sur un arbre d'entrée (28) de la boîte de vitesses (16).
